# EUROPEAN PATENT APPLICATION

(11) **EP 0 832 921 A1**
(43) Date of publication of application: **01.04.1998**
(21) Application number: 97307562.5
(22) Date of filing: 26.09.1997
(51) Int. Cl.: C08K 9/10, C08L 83/04

(54) **Heat-curable polyorganosiloxane composition**

(30) Priority: 27.09.1996 JP 277156/96
(71) Applicant: Dow Corning Toray Silicone Company Ltd., Ichihara-shi, Chiba Prefecture (JP)
(72) Inventor: Hamada, Mitsuo, Dow Corning Toray Sil. Co., Ltd., Ichihara-shi, Chiba Prefecture (JP); Shimizu, Koji, Dow Corning Toray Sil. Co., Ltd., Ichihara-shi, Chiba Prefecture (JP)
(74) Representative: Lewin, John Harvey

(57) **Abstract**

A heat-curable polyorganosiloxane composition is disclosed that has a long use time at room temperature and that also cures rapidly upon heating. Said composition compromises
(A) 100 weight parts of a polyorganosiloxane comprising at least two silicon-bonded alkenyl groups in each molecule and that is represented by the average unit formula R_{*a*}SiO₍₄₋_{*a*}_{)/2}, where R represents substituted or unsubstituted monovalent hydrocarbon groups and *a* is a number from 1.0 to 2.3;
(B) from 0.1 to 10 weight parts of a polyorganohydrogensiloxane that contains at least 2 silicon-bonded hydrogen atoms in each molecule,
and
(C) from 0.1 to 10 weight parts of a cured silicone catalyst that contains a platinum group metal or a platinum metal group compound.

## Description

This invention relates to heat-curable polyorganosiloxane compositions that cure by addition reaction between alkenyl-functional polyorganosiloxanes and polyorganohydrogensiloxanes where the composition, upon mixing its several components, has a long use time at room temperature but cures rapidly upon heating.

Polyorganosiloxane compositions that cure through the addition reaction between alkenyl-functional polyorganosiloxane and SiH-functional polyorganohydrogensiloxane are characterized by their ability to cure rapidly in deep sections without generating undesirable by-products. As a result, they are used over a broad spectrum of fields as adhesives potting materials or coatings for electrical and electronic components, and as release coatings for paper and films.

However, these compositions must generally be stored in 2 separate packages due to the high reactivity of these compositions. For example, a composition comprising base polymer and curing catalyst is placed in one package; a composition comprising the base polymer and crosslinking component is placed in another package; and at the point of use the contents of these 2 packages are mixed and cure is subsequently effected. A low reactivity at room temperature during this latter mixing sequence, that is a long use time; offers a number of advantages in industrial practice. For instance, in molding operations employing an injection or extrusion molder and unexpected event of an extended machine stoppage, a long use time makes it unnecessary to clean the machine, reduces work inputs, and minimizes material loss.

A present tactic for lengthening use time of such compositions consists of inhibiting the catalytic activity of the catalyst that accelerates the addition reaction. One such method uses an additive that inhibits the catalytic activity of the platinum metal catalyst or platinum metal compound packaged with the polyorganosiloxane composition. Examples of such additives are benzotriazole, acetylenic compounds, and hydroperoxy compounds. However, when this approach is used for long-term storage stability, it causes a decline in the curing characteristics and lengthens the time required for cure. Although a polyorganosiloxane composition is ultimately obtained that has excellent properties in terms of low reactivity and long use time, this composition will not cure rapidly when heated.

Thus, the object of this invention is to provide a heat-curable polyorganosiloxane composition that is characterized by a long use time at room temperature and that also cures rapidly upon heating.

The present invention is a heat-curable polyorganosiloxane composition comprising
(A) 100 weight parts of a polyorganosiloxane comprising at least two silicon-bonded alkenyl groups in each molecule and that is represented by the average unit formula R_{*a*}SiO₍₄₋_{*a*}_{)/2}, where R represents substituted or unsubstituted monovalent hydrocarbon groups and *a* is a number from 1.0 to 2.3;
(B) from 0.1 to 10 weight parts of a polyorganohydrogensiloxane that contains at least two silicon-bonded hydrogen atoms in each molecule,
   and
(C) from 0.1 to 100 weight parts of a cured silicone catalyst that contains a platinum group metal or platinum group metal compound.

Our composition is conveniently prepared by mixing components (A) to (C) to homogeneity. While the order of mixing is not critical, a preferred procedure compromises first homogeneously dispersing component (C) in a small amount of component (A), and then adding that dispersion to a mixture of components (A) and (B). Mixing is effected with any means that does not rupture or break component (C), the cured silicone catalyst containing a platinum group metal or platinum group metal compound.

The present composition is therefore very useful as a silicone rubber composition, silicone gel composition, or silicone resin composition. Because our heat-curable polyorganosiloxane composition comprises components (A) to (C), and in particular because it contains as curing catalyst the cured silicone catalyst (C), our composition is characterized by a long use time at room temperature and the ability to cure rapidly upon heating.

The polyorganosiloxane (A) of the present invention is the first component of the present composition. This component contains at least two silicon-bonded alkenyl groups in each molecule. R represents monovalent hydrocarbon groups, for example, alkyl groups such as methyl, ethyl, propyl, butyl, hexyl, and octyl; alkenyl groups such as vinyl, allyl, and hexenyl; aryl groups such as phenyl; and substituted hydrocarbon groups such as 3,3,3-trifluoropropyl. The subscript *a* in the formula for component (A) has a value from 1.0 to 2.3. This polyorganosiloxane may also contain small amounts of hydroxyl or alkoxy. The molecular structure of (A) may be straight-chain or branched-chain. The degree of polymerization for component (A) is not critical, and polyorganosiloxanes ranging from fluids up to gums at 25°C are switchable.

The polyorganohydrogensiloxane (B) of the present invention is a crosslinker for component (A). To obtain cure of the present composition and to produce a network structure, this component contains at least two silicon-bonded hydrogen atoms in each molecule. The non-hydrogen silicon-bonded organic groups in component (B) are exemplified by the same R groups as described above for polyorganosiloxane (A). Component (B) may contain in each molecule only a single selection from these organic groups, or it may contain two or more organic groups. The molecular form of the polyorganohydrogensiloxane (B) includes straight-chain, cyclic, network, and three-dimensional structures. Homopolymers and copolymers of (B) can be used, as can mixtures of two or more of these polymers. The polyorganohydrogensiloxane (B) has a viscosity at 25°C of from 0.5 to 50,000 mPa·s, and preferably a viscosity of 1 to 10,000 mPa·s at 25°C. Component (B) is preferably added in a quantity that affords a value of from 0.5:1 to 10:1 for the molar ratio of Si-bonded hydrogen in (B) to Si-bonded alkenyl in component (A). This component in general will be from 0.1 to 10 weight parts per 100 weight parts of component (A).

Component (C) is a cured silicone catalyst that contains a platinum group metal or platinum group metal compound. Component (C) is a catalyst for facilitating crosslinking by addition reaction between the silicon-bonded alkenyl in component (A) and the silicon-bonded hydrogen in component (B). The platinum group metal catalysts and platinum group metal compound catalysts are exemplified by chloroplatinic acid, alcohol-modified chloroplatinic acid, platinum/olefin complexes, platinum/ketone complexes and platinum/vinylsiloxane complexes; by platinum supported on carriers such as alumina, silica, and carbon black; by palladium-based catalysts such as tetrakis(triphenylphosphine)palladium; and by rhodium-based catalysts. Platinum/vinylsiloxane complexes are preferred for their high catalytic activity.

The cured silicone present in component (C) is, for example, cured silicone afforded by addition reaction-curing of polyorganosiloxane compositions comprising a polyorganosiloxane having at least two silicon-bonded alkenyl groups in each molecule, polyorganohydrogensiloxane having at least two silicon-bonded hydrogens in each molecule, and a platinum group metal or metal compound catalyst; cured silicone afforded by free radical cure of silicone rubber compositions comprising organoperoxide and polyorganosiloxane having at least two silicon-bonded alkenyl groups in each molecule; or cured silicone afforded by condensation reaction cure of silicone rubber compositions comprising polyorganosiloxane having at least two silanol groups in each molecule, a polyorganohydrogensiloxane having at least two silicon-bonded hydrogen atoms in each molecule, and a platinum group metal or metal compound catalyst. The addition reaction-curing polyorganosiloxane compositions and the condensation reaction-curing silicone rubber compositions are preferred herein for their rapid cure rates and uniform cures.

The platinum group metal or platinum group metal compound are preferably present in a proportion that provides from 0.0001 to 0.1 weight percent of platinum group metal in component (C). The presence of less than 0.0001 weight percent of platinum group metal results in diminished post-cure physical properties for the composition of this invention. Component (C) is generally added from 0.1 to 100 weight parts per 100 weight parts of component (A). The average particle size of component (C) is generally from 0.1 to 200 µm and is preferably from 1 to 100 µm. Average particle sizes below 0.1 µm result in a drastic decline in yield during production. Average particle sizes in excess of 200 µm result in a loss of stability for dispersion within the polydiorganosiloxane (A).

While component (C) is prepared by various methods, a preferred component (C) is made by :
preparing a silicone rubber composition comprising
   (a) polyorganosiloxane comprising at least two alkenyl groups in each molecule,
   (b) polyorganohydrogensiloxane comprising at least two silicon-bonded hydrogen atoms in each molecule,
      and
   (c) a catalyst of a platinum group metal or platinum group metal compound, at from 0.1 to 1,000 weight parts as platinum metal for each 1,000,000 weight parts of the total of components (a) and (b);
dispersing the composition in water to give a waterbome dispersion in which said composition is the discontinuous phase; and
curing the silicone rubber composition by bringing the waterborne dispersion into contact with a liquid or gas at a temperature of at least 40°C.

The polyorganosiloxane (a) used in this catalyst is the base component of the that silicone rubber composition, and it undergoes cure by addition reaction with component (b) under the catalytic activity of component (c).

Component (a) comprises at least two silicon-bonded alkenyl groups in each molecule. When this component contains fewer than two alkenyl groups, a good quality cured silicone catalyst cannot be obtained due to the absence of network structure formation. The representative alkenyls are exemplified by vinyl, allyl, and propenyl. The alkenyls may be present at any position in the molecule, but are preferably present at the molecular terminals. The molecular structure of this component may be straight chain, branch-containing straight chain, cyclic, or network. The straight chain structures, either branch-free or containing slight branching, are preferred. The molecular weight of this component is not critical, and it may range from low viscosity fluids to very high viscosity gums. However, in general component (a) will have a viscosity at 25°C of from 10 to 100,000 mPa·s.

The polyorganosiloxane (a) is exemplified by trimethylsiloxy-endblocked methylvinylsiloxane-dimethylsiloxane copolymers, dimethylvinylsiloxy-endblocked polydimethysiloxanes, dimethylvinylsiloxy-endblocked dimethylsiloxane-methylphenylsiloxane copolymers; dimethylvinylsiloxy-endblocked dimethylsiloxane-diphenylsiloxane-methylvinylsiloxane copolymers, trimethylsiloxy-endblocked dimethylsiloxane-methylvinylsiloxane copolymers, trimethylsiloxy-endblocked dimethylsiloxane-methyl phenylsiloxane-methylvinylsiloxane copolymers, dimethylvinylsiloxy-endblocked methyl(3,3,3-trifluoropropyl)polysiloxanes, dimethylvinylsiloxy-endblocked dimethylsiloxane-methyl(3,3,3-trifluoropropyl)siloxane copolymers, and the polysiloxanes consisting of CH₂=CH(CH₃)₂SiO_{1/2}, (CH₃)₃SiO_{1/2}, and SiO_{4/2} units.

Component (b) is a crosslinker for component (a). Cure proceeds by addition reaction of the silicon-bonded hydrogen atoms in this component with the alkenyl groups in component (a) under the catalytic activity of component (c). Component (b) comprises at least two silicon-bonded hydrogen atoms in each molecule to function as crosslinker.

The molecular structure of (b) is not critical and may be straight chain, branch-containing straight chain, or cyclic. While the molecular weight of component (b) is also not critical, component (b) preferably has a viscosity at 25°C from 1 to 50,000 mpa's because this affords good compatibility with component (a).

Component (b) is preferably added in an amount that provides a value of from 0.5 : 1 to to 20 : 1 for the molar ratio of the total amount of silicon-bonded hydrogen atoms in component (b) to the total amount of alkenyl groups in component (a). Obtaining a good quality cured silicone rubber particulate becomes problematic when this molar ratio falls below 0.5:1. A tread to excessively high durometers occurs when this molar ratio exceeds to 20 : 1.

Component (b) is specifically exemplified by trimethylsiloxy-endblocked polymethylhydrogensiloxanes, trimethylsiloxy-endblocked dimethylsiloxane-methylhydrogensiloxane copolymers, dimethylhydrogensiloxy-endblocked dimethylsiloxane-methylhydrogensiloxane copolymers, dimethylsiloxane-methylhydrogensiloxane cyclic copolymers, copolymers composed of (CH₃)₂HSiO_{1/2} and SiO_{2/4} units, and copolymers composed of (CH₃)₃SiO_{1/2}, (CH₃)₂HSiO_{1/2}, and SiO_{4/2} units.

Component (c) is a catalyst for the addition reaction between the silicon-bonded hydrogen atoms and alkenyl groups of components (b) and (a), respectively. Component (c) is exemplified by chloroplatinic acid, alcohol-modified chloroplatinic acid, platinum/olefin complexes, platinum/ketone complexes, and platinum/vinylsiloxane complexes; by platinum supported on carriers such as alumina, silica, and carbon black; by palladium-based catalysts such as tetrakis(triphenylphosphine)palladium; and by rhodium-based catalysts. Platinum/vinylsiloxane complexes are preferred for their catalytic activity. Component (c) is added at from 0.1 to 1,000 weight parts, and preferably at from 1 to 1,000 weight parts, in each case as platinum group metal for each 1,000,000 weight parts of the total of components (a) and (b). At less than 0.1 weight part, the catalyst (a) afforded by silicone rubber particulate containing a platinum group metal catalyst or a platinum group metal compound has a reduced catalytic activity. At more than 1,000 weight parts, the resulting composition has a reduced storage stability. The above described silicone rubber composition is prepared simply by mixing components (a) to (c) to homogeneity.

In this preferred method for producing component (C), a waterborne dispersion is produced in which said silicone rubber composition is dispersed as a discontinuous phase in water. This waterborne dispersion can be prepared by various procedures. For example, a suitable the waterborne dispersion is prepared by adding water to the above silicone rubber composition and by then passing the mixture through a commercial colloid mill. Alternatively, the waterborne dispersion can also be prepared by directly introducing all of the constituent components of said silicone rubber composition into a homomixer, by then adding water, and finally by stirring.

The above waterborne dispersion of the silicone rubber composition is then brought into contact with a fluid or gas residing at a temperature of at least 40°C. The fluid used here must be able to heat and cure the silicone rubber composition, but its nature is not otherwise critical. However, fluids that poison the silicone rubber composition, or fluids that are good solvents for said composition should be avoided.

Typical fluids are water, liquid paraffins, waxes, and the various liquid compounds used as thermal media, e.g., dimethylsilicone oils and/or phthalate esters. Water is specifically preferred for its high heat capacity and ease of handling.

Any of a number of methods can be used to contact the waterborne dispersion with the fluid. One suitable method consists of the continuous introduction of small quantities of the waterborne dispersion into a mixer filled with hot water, residing at a temperature of at least 40°C, and then effecting said dispersion in the hot water by mixing.

A number of methods are also available for contacting the waterborne dispersion with a gas. One preferred method consists of spraying said dispersion into a heated oven held at a temperature of at least 40°C. In this latter method, it is crucial from a safety standpoint that the heated oven have been preliminarily filled with an inert gas such as nitrogen.

In another preferred component (C), component (C) is prepared by pulverizing the cured product from a silicone rubber composition comprising
(a) polyorganosiloxane that contains at least two alkenyl groups in each molecule,
(b) polyorganohydrogensiloxane that contains at least two silicon-bonded hydrogen atoms in each molecule,
   and
(c) a catalyst of a platinum group metal or platinum metal compound, at from 0.1 to 1,000 weight parts as platinum metal for each 1,000,000 weight parts of the total of components (a) and (b).

Therein, the silicone rubber composition comprising components (a) to (c) of this particular method is the same as the composition described above. In this latter method, the composition is first cured and the resulting cured product is then pulverized. The use of excessively high curing temperatures herein will cause a progressively severe reduction in the catalytic activity of the platinum group metal or platinum group metal compound. As a result, temperatures no greater than 200°C are preferred, and temperatures no greater than 150°C are particularly preferred. Pulverization is effected, for example, by directly pulverizing and particulating the cured silicone using a grinder.

Our claimed heat-curable polyorganosiloxane composition comprises the components (A), (B), and (C) described above. However, insofar as the object of the invention is not impaired, the subject composition may optionally contain particulate silica such as fumed silica or wet silica; surface-hydrophobicized silica; crepe-hardening inhibitors; non-polyorganosiloxane polymers; organic solvents; heat stabilizers, such as iron oxide and rare-earth compounds; flame retardants, such as manganese carbonate and fumed titanium oxide; quartz; diatomaceous earth; calcium carbonate; glass fibers; carbon black; and the like.

### EXAMPLES

The invention will now be explained in greater detail through working examples. In the examples, parts denotes weight parts. The values reported for viscosity were all measured at 25°C.

### REFERENCE EXAMPLE 1

### Synthesis of platinum/vinylsiloxane complex

160 g of 1,3-divinyltetramethyldisiloxane and 32.0 g of chloroplatinic acid (H₂PtCl₆6H₂O) were combined and mixed for 1 hour in a nitrogen current while heating at 120°C. The platinum black by-product was then removed by filtration, and the acid was thereafter removed by washing with water. This yielded a reaction product containing a complex of chloroplatinic acid and 1,3-divinyltetramethyldisiloxane. The platinum metal concentration in this reaction product was 4.25 weight percent.

### REFERENCE EXAMPLE 2

A Mixture A was prepared by mixing 6 parts of trimethylsiloxy-endblocked polymethylhydrogensiloxane with silicon-bonded hydrogen atom content of 1.0 weight percent, with a viscosity of 10 2/3, into 100 parts of dimethylvinylsiloxy-endblocked polydimethylsiloxane, with vinyl content of 0.5 weight percent and a viscosity of 1,000 mPa·s.

A Mixture B was similarly prepared by mixing 0.3 part of isopropanolic chloroplatinic acid solution, with platinum content of 3 weight percent, into 100 parts of the polydimethylsiloxane described above.

Mixtures A and B were placed in separate silicone rubber composition tanks. They were then fed using pressure-delivery pumps into a stirrer-equipped mixer that had been preliminarily cooled to -10°C and were mixed at a 1 : 1 weight ratio to give a Mixture M. Again using pressure-delivery pumps, 500 parts of Mixture M and 1,000 parts of water at +5°C were simultaneously fed into a colloid mill from the Manton-Gaulin Company, and the mixture was milled at 14,000 rpm on a 0.1 mm gap to give a waterborne dispersion of a silicone rubber composition. The temperature of the waterborne dispersion at this point was +5°C. This dispersion was directly and continuously fed into a stirrer-equipped mixer, filled with hot water at 80°C and was dispersed at a stirring rate of 10 rpm. A spherical silicone rubber particulate with an average particle size of 10 µm was obtained.

### EXAMPLE 1

The following were combined and mixed to give a mixture N:
100 parts of dimethylvinylsiloxy-endblocked polydimethylsiloxane with vinyl content of 0.25 weight percent and a viscosity of 2,000 mPa·s;
30 parts of fumed silica with a surface area of 200 m²/g, 30 parts of quartz with a particle size of 5 µm; and
2 parts of trimethylsiloxy-endblocked polymethylhydrogensiloxane with a silicon-bonded hydrogen content of 0.8 weight percent, and a viscosity of 5 mPa·s.
Five parts of the platinum compound catalyst containing spherical silicone rubber particulate, prepared in Reference Example 2, were mixed into 100 parts of mixture N to give an polyorganosiloxane composition with a viscosity of 500 Pa.s. The physical properties of the cured product afforded by this composition were measured using the methods of JIS K 6301. In addition, the heat-curing characteristics of this polyorganosiloxane composition were measured at 200°C using a Curastometer TM Model 3 from Toyo Baldwin Kabushiki Kaisha.

The following heat-curing characteristics were determined: time until cure initiation (Ip), and time until the torque achieved 90% of its maximum value (T₉₀). Finally, the use time of this composition was examined by monitoring the viscosity change in the composition at 70°C. The various measurement results are reported in Table 1.

### COMPARATIVE EXAMPLE 1

For purposes of comparison, an polyorganosiloxane composition was prepared as in Example 1, but replacing the platinum compound catalyst-containing spherical silicone rubber particulate from Reference Example 2 with an amount of the precursor platinum/vinylsiloxane complex catalyst of Reference Example 1 that provided the same platinum content. The results from measurement of the curing characteristics of this composition are reported in Table 1 as Comparative Example 1.

**Table 1.**

| Properties | | Example 1 | Comparative Example 1 |
|---|---|---|---|
| physical properties | | | |
| durometer | (JIS A) | 55 | 57 |
| tensile strength | (kg/cm²) | 60 | 58 |
| tensile elongation | (%) | 320 | 350 |
| tear strength | (kg/cm) | 12 | 15 |

| curing characteristics | | | |
|---|---|---|---|
| Ip | (seconds) | 60 | 13 |
| T₉₀ | (seconds) | 120 | 17 |

| use time | | | |
|---|---|---|---|
| viscosity immediately after preparation | (Pa·s) | 500 | 380 |
| after 7 days | (Pa·s) | 550 | could not be measured (cured after 3 days) |

### EXAMPLE 2

Polyorganosiloxane composition was prepared as in Example 1, but in this case using 30 parts of the platinum compound catalyst containing spherical silicone rubber particulate from Reference Example 2 instead of the 5 parts of silicone rubber particluate that was used in Example 1. The physical properties and curing characteristics of this polyorganosiloxane composition were measured as in Example 1, and the results are reported in Table 2.

**Table 2.**

| Properties | | Example 2 |
|---|---|---|
| physical properties | | |
| durometer | (JIS A) | 50 |
| tensile strength | (kg/cm²) | 50 |
| tensile elongation | (%) | 250 |
| tear strength | (kg/cm) | 10 |

| curing characteristics | | |
|---|---|---|
| Ip | (seconds) | 20 |
| T₉₀ | (seconds) | 60 |

| use time | | |
|---|---|---|
| viscosity immediately after preparation | (Pa·s) | 800 |
| after 10 days | (Pa·s) | 1000 |

### EXAMPLE 3

Mixture M from Reference Example 2 was filled into a sheet-forming mold and cured by heating at 130°C to give a 2 mm thick sheet molding. This molding was then placed in an automatic mortar and ground to give a silicone rubber particulate with an average particle size of 50 µm. 5 parts of the resulting particulate were next added to and mixed to homogeneity into the Mixture N as described in Example 1 to give a silicone rubber composition. The physical properties and heat-curing characteristics of this composition were measured, and the measurement results are reported in Table 3.

**Table 3.**

| Properties | | Example 3 |
|---|---|---|
| curing characteristics | | |
| Ip | (seconds) | 50 |
| T₉₀ | (seconds) | 100 |

| use time | | |
|---|---|---|
| immediately after preparation | (Pa·s) | 500 |
| after 10 days | (Pa·s) | 660 |
| after 14 days | (Pa·s) | 800 |

## Claims

1. A heat-curable polyorganosiloxane composition comprising
(A) 100 weights parts of a polyorganosiloxane comprising at least two silicon-bonded alkenyl groups in each molecule described by average unit formula R_{*a*}SiO₍₄₋_{*a*}_{)/2,} where R represents substituted or unsubstituted monovalent hydrocarbon groups and *a* is a number from 1.0 to 2.3,
(B) from 0.1 to 100 weight parts of a polyorganohydrogensiloxane comprising at least two silicon-bonded hydrogen atoms in each molecule,
and
(C) from 0.1 to 100 weight parts of a cured silicone rubber catalyst comprising a platinum group metal or a platinum group metal compound.

2. The heat-curable polyorganosiloxane composition of Claim 1 in which component (B) has a viscosity from 0.5 to 50,000 mPa·s at 25°C.

3. The heat-curable polyorganosiloxane composition of Claim 1 in which component (B) is added in a quantity that affords a value of from 0.5:1 to 10:1 for the molar ratio of the Si-bonded hydrogen atoms in (B) to the Si-bonded alkenyl groups in component (A).

4. The heat-curable polyorganosiloxane composition of Claim 1 in which component (C) comprises a condensation reaction curing silicone rubber composition.

5. The heat-curable polyorganosiloxane composition of Claim 1 in which component (C) comprises from 0.0001 to 0.1 weight percent of the platinum group metal.

6. The heat-curable polyorganosiloxane composition of Claim 1 in which the average particle size of component (C) is from 0. 1 to 200 µm.
